# EUROPEAN PATENT APPLICATION

(11) **EP 4 692 475 A1**
(43) Date of publication of application: **11.02.2026**
(21) Application number: 24862478.5
(22) Date of filing: 01.08.2024
(51) Int. Cl.: E02F 9/26, G01C 15/00

(54) **POSITION IDENTIFICATION SYSTEM, POSITION IDENTIFICATION DEVICE, AND POSITION IDENTIFICATION METHOD**

(30) Priority: 05.09.2023 JP 2023143995
(71) Applicant: KOBELCO CONSTRUCTION MACHINERY CO., LTD., Hiroshima-shi, Hiroshima 731-5161 (JP); Nagoya Institute Of Technology, Nagoya-shi, Aichi 466-8555 (JP)
(72) Inventor: TAMAKI, Toru, Nagoya-shi, Aichi 466-8555 (JP); KYU, Shingun, Hiroshima-shi, Hiroshima 731-5161 (JP)
(74) Representative: TBK
(86) International application number: PCT/JP2024/027507
(87) International publication number: WO 2025/052824

(57) **Abstract**

A position identification system (50) includes a position information detector (53), and a controller (52) that identifies the position of a slewing axis (AX) of an upper slewing body (2) of a work machine (100) by using slewing information that is information acquired by the position information detector (53) when the upper slewing body (2) is slewing. The slewing information includes specific part position information that is information regarding the position of a specific part (5, 60) of the work machine (100), the specific part rotating about the slewing axis (AX) along with the slewing of the upper slewing body (2).

## Description

### Technical Field

The present disclosure relates to a position identification system, a position identification device, and a position identification method.

### Background Art

Patent Literature 1 discloses a work machine equipped with a position measurement system. The technique described in Patent Literature 1 measures an absolute position of a monitor point set in a work device in a three-dimensional space by using a global navigation satellite system (GNSS).

Patent Literature 2 discloses a position detection system of a tunnel excavator that cuts a cutting face in a tunnel with an automatic cross-section excavator. The technique described in

Patent Literature 2 identifies coordinates of a work machine by using an automatic tracking function of a total station.

In the technique described in Patent Literature 1, the accuracy of position measurement may decrease depending on the situation of the area where the technique is used, and thus there is a problem that the use scene is limited and versatility is poor. Specifically, for example, in the technique using the GNSS, the accuracy of position measurement may decrease in accordance with the arrangement situation of a navigation satellite. The accuracy of position measurement may also be deteriorated by interference of communication (frequency) between a fixed station and a wireless device of a work machine with other wireless communication. The accuracy of position measurement may also decrease in areas such as the inside of a tunnel, the vicinity of a high-voltage electric wire, a valley in a mountain, and the vicinity of a large building.

Since the facility of the total station having the automatic tracking function as in the technique described in Patent Literature 2 is expensive, there is a problem that the use scene is limited and versatility is poor.

### Citation List

### Patent Literatures

Patent Literature 1: JP 2020-139933 A
Patent Literature 2: JP 2002-161696 A

### Summary of Invention

An object of the present disclosure is to provide a position identification system, a position identification device, and a position identification method capable of identifying a position of a work machine and having excellent versatility.

A position identification system provided by the present disclosure includes a position information detector, and a controller that identifies the position of a slewing axis of an upper slewing body of a work machine by using slewing information that is information acquired by the position information detector when the upper slewing body is slewing. The slewing information includes specific part position information that is information regarding a position of a specific part of the work machine, the specific part rotating about the slewing axis along with the slewing of the upper slewing body.

### Brief Description of Drawings

FIG. 1 is a perspective view showing an example of a work device.
FIG. 2 is a schematic diagram showing a position identification system according to a first embodiment.
FIG. 3 is a flowchart showing an example of calculation processing performed by a controller of the position identification system according to the first embodiment.
FIG. 4 is a schematic diagram showing an example of three-dimensional position information acquired by a position information detector of the position identification system according to the first embodiment.
FIG. 5 is a schematic diagram showing an example of specific part position information selected from the three-dimensional position information as slewing information acquired by the position information detector in the first embodiment.
FIG. 6 is a diagram showing a plane identified by using the specific part position information in the first embodiment.
FIG. 7 is a diagram showing a part of a circle identified by using the specific part position information and a position of a slewing axis identified by using the plane and the circle in the first embodiment.
FIG. 8 is a schematic diagram showing a position identification system according to a modification of the first embodiment.
FIG. 9 is a schematic diagram showing a position identification system according to a second embodiment.
FIG. 10 is a flowchart showing an example of calculation processing performed by a controller of the position identification system according to the second embodiment.
FIG. 11 is a schematic diagram showing three-dimensional position information as slewing information acquired by a position information detector of the position identification system in the second embodiment.
FIG. 12 is a flowchart showing an example of calculation processing performed by a controller of the position identification system according to a first modification of the second embodiment.
FIG. 13 is a schematic diagram showing a position identification system according to a second modification of the second embodiment.

### Description of Embodiments

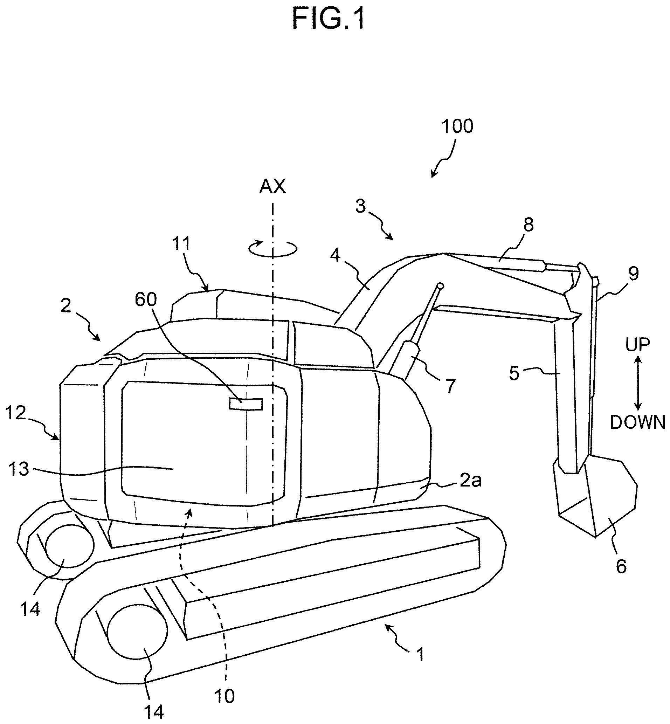

An embodiment of the present disclosure will be described with reference to the drawings. FIG. 1 is a perspective view showing an example of a work machine 100. Although the work machine 100 shown in FIG. 1 is a hydraulic excavator, a work machine in the present disclosure is not limited to an excavator, and may be another work machine such as a crane or a bulldozer.

The work machine 100 includes a lower travelling body 1, an upper slewing body 2, and a work device 3. The lower travelling body 1 includes a travelling device including a crawler. Alternatively, the lower travelling body 1 may have a travelling device including a tire (not shown) instead of the crawler.

The upper slewing body 2 is supported by the lower travelling body 1 so as to be slewable with respect to the lower travelling body 1 about a slewing axis AX extending vertically. The upper slewing body 2 includes a slewing frame 2a supported by the lower travelling body 1, a cab 11 disposed on the slewing frame 2a, and a counter weight 12. The upper slewing body 2 has an outer surface 13 including a right side surface, a left side surface, an upper surface, and a back surface.

The work device 3 is supported by the upper slewing body 2 to be capable of derricking. The work device 3 includes a boom 4, an arm 5 rotatably attached to a distal end of the boom 4, and a distal end attachment 6 rotatably attached to a distal end of the arm 5. The distal end attachment 6 shown in FIG. 1 is a bucket, but may be a gripping device such as a grapple or a fork, may be a crusher, may be a lifting magnet, or may be another distal end attachment.

The work machine 100 includes a plurality of actuators. The plurality of actuators includes a boom cylinder 7, an arm cylinder 8, a distal end attachment cylinder 9, a slewing motor 10, and left and right travelling motors 14.

The boom 4 performs a derricking operation of derricking with respect to the upper slewing body 2 along with a telescopic operation of the boom cylinder 7. Specifically, when the boom cylinder 7 contracts, the boom 4 performs a boom lowering operation in which the distal end of the boom 4 approaches the ground. When the boom cylinder 7 extends, the boom 4 performs a boom raising operation in which the distal end of the boom 4 moves away from the ground.

The arm 5 rotates with respect to the boom 4 along with the telescopic operation of the arm cylinder 8. Specifically, when the arm cylinder 8 contracts, the arm 5 performs an arm pushing operation in which the distal end of the arm 5 moves away from the boom 4. When the arm cylinder 8 extends, the arm 5 performs an arm pulling operation in which the distal end of the arm 5 approaches the boom 4.

The distal end attachment 6 performs a rotation operation of rotating with respect to the arm 5 along with the telescopic operation of the distal end attachment cylinder 9. The upper slewing body 2 performs a slewing operation (a rightward slewing operation or a leftward slewing operation) with respect to the lower travelling body 1 along with the operation of the slewing motor 10. The lower travelling body 1 performs a travelling operation along with the operations of the left and right travelling motors 14.

### [Position identification system]

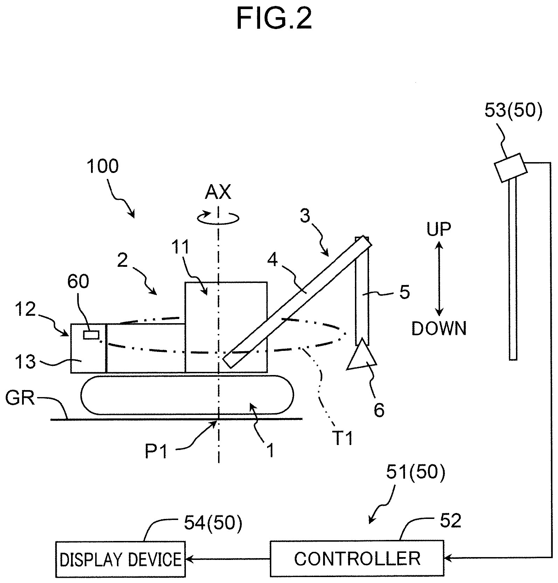

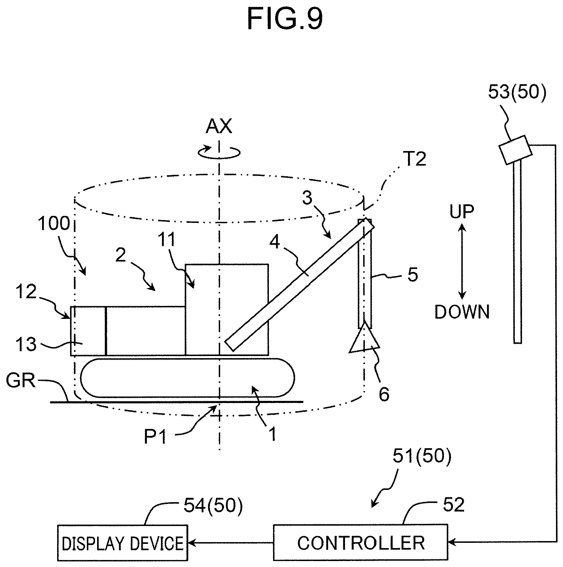

FIG. 2 is a schematic diagram showing a position identification system 50 according to a first embodiment, and FIG. 9 is a schematic diagram showing a position identification system 50 according to a second embodiment. First, characteristics common to the position identification system 50 according to the first embodiment and the position identification system 50 according to the second embodiment will be described.

Each of the position identification system 50 according to the first embodiment and the position identification system 50 according to the second embodiment includes a position identification device 51, a position information detector 53, and a display device 54. The position identification device 51 includes a controller 52. In the position identification system 50, the display device 54 is not an essential component and can be omitted.

The position information detector 53 is configured to acquire slewing information when the upper slewing body 2 of the work machine 100 is slewing. The slewing information includes specific part position information that is information regarding a position of a specific part of the work machine 100, the specific part rotating about the slewing axis AX along with slewing of the upper slewing body 2. In the first embodiment, the specific part is a mark 60, and in the second embodiment, the specific part is the arm 5. The position information detector 53 inputs a detection result to the controller 52. The controller 52 identifies the position of the slewing axis AX by using the slewing information acquired by the position information detector 53 when the upper slewing body 2 is slewing. The controller 52 includes a computer including a calculation processing device and a memory. The controller 52 performs various calculation processing including the identification of the position of the slewing axis AX by the calculation processing device executing a control program stored in the memory. The display device 54 may display, for example, the position of the identified slewing axis AX or information related to the position.

In general, a work machine including an upper slewing body, that is, a slewing-type work machine always has a slewing axis, and the slewing axis is located at a certain central position in the work machine. Therefore, the slewing axis can be a representative part in indicating the position of the work machine. In each of the first and the second embodiments, the controller 52 can identify the position of the slewing axis AX by using the slewing information acquired by the position information detector 53 when the upper slewing body 2 is slewing. Specifically, the specific part is a part that rotates, along with the slewing of the upper slewing body 2, about the slewing axis AX common to the upper slewing body 2, and moves along a certain annular orbit (a circular orbit T1 in FIG. 2, and a cylindrical orbit T2 in FIG. 9) about the slewing axis AX at the time of slewing. Therefore, the specific part position information included in the slewing information acquired by the position information detector 53 when the upper slewing body 2 is slewing includes information regarding the position of the specific part rotating about the slewing axis AX as the upper slewing body 2 slews, that is, information regarding an annular orbit (circular orbit T1 or cylindrical orbit T2) drawn by the specific part when the upper slewing body 2 is slewing, and the slewing axis AX is located at the center of the annular orbit (circular orbit T1 or cylindrical orbit T2). Thus, the controller 52 can identify the position of the slewing axis AX by using the slewing information including the specific part position information.

The position information detector 53 is disposed at such a position that a detection target including the specific part is included in a detection range (visual field range). Specifically, for example, as shown in each of FIGS. 2 and 9, the position information detector 53 is disposed at a certain distance from the work machine 100 such that a whole or substantially a whole of the work machine 100 is included in the detection range at a work site. However, since the position information detector 53 is only required to be disposed such that at least the mark 60 (specific part) is included in the detection target when the upper slewing body 2 is slewing, the position information detector is not required to be disposed such that the whole of the work machine 100 is included in the detection range.

In each of the first and second embodiments, the position information detector 53 is not required to be a large-scale position measurement system such as a GNSS and a total station, and may be, for example, a simple detector capable of detecting position information of a detection target including the specific part at the work site at which the work machine 100 is disposed.

Specifically, the position information detector 53 may be, for example, a three-dimensional position information detector that detects three-dimensional information of the detection target at the work site. The three-dimensional position information detector may be, for example, a three-dimensional camera capable of detecting vertical and horizontal two-dimensional information of the detection target and depth information of the detection target. The three-dimensional camera may be a stereoscopic three-dimensional camera (stereo camera), TOF (a time of flight) three-dimensional camera, or a three-dimensional camera in which a projector and a camera are combined. The TOF three-dimensional camera may be, for example, LiDAR (light detection and ranging ). The position information detector 53 may be a millimeter wave radar or an ultrasonic sensor. However, the position information detector 53 is not limited to the above specific example as long as capable of detecting the three-dimensional information regarding the detection target at the work site. The position information detector 53 may be a combination of two or more of the plurality of three-dimensional position information detectors described above as specific examples. However, the position information detector is not limited to these specific examples.

The slewing information includes three-dimensional position information of the detection target including the specific part, the three-dimensional position information being acquired by the position information detector 53. The controller 52 selects the specific part position information from the three-dimensional position information, and identifies the position of the slewing axis AX by using the selected specific part position information. In each of the first and second embodiments, even in a case where the three-dimensional position information detected by the position information detector 53 includes not only the specific part position information that is information regarding the position of the specific part included in the detection target but also information other than the specific part position information, that is, information regarding the position of another part included in the detection target, the controller 52 can select the specific part position information from the three-dimensional position information and identify the position of the slewing axis AX by using the selected specific part position information.

The above characteristics are common to the first and second embodiments. Hereinafter, the characteristics of the first and second embodiments will be individually described.

### [First embodiment]

In the first embodiment shown in FIG. 2, the specific part includes the mark 60 attached to the upper slewing body 2. In the specific example of FIG. 2, the mark 60 is attached to the outer surface 13 of the upper slewing body 2. Specifically, the mark 60 is attached to the back surface of the upper slewing body 2 of the outer surface 13.

The mark 60 includes a reflector. This reflector is formed of a member that easily reflects light such as laser light as compared with the outer surface 13 of the upper slewing body 2. The reflector may be, for example, a retroreflective reflector or another reflector.

The controller 52 identifies a circle or a part of a circle corresponding to a track of the mark 60 when the upper slewing body 2 is slewing by using the specific part position information, and identifies the position of the center of the identified circle as the position of the slewing axis AX. In a case where the mark 60 moves along the certain circular orbit T1 about the slewing axis AX when the upper slewing body 2 is slewing, the track of the mark 60 when the upper slewing body 2 is slewing has a circular shape or an arc shape about the slewing axis AX. Therefore, the specific part position information includes information regarding the track of the mark 60 having a circular shape or an arc shape. Therefore, the controller 52 can identify a circle or a part (arc) of the circle corresponding to the track of the mark 60 by using the specific part position information, and can identify the position of the center of the identified circle as the position of the slewing axis AX.

The controller 52 identifies a relative position of the work machine 100 with respect to a ground GR on which the lower travelling body 1 of the work machine 100 is disposed based on relative position information which is information regarding the relative position of the mark 60 with respect to the upper slewing body 2 and based on the position of the slewing axis AX. The relative position of the work machine 100 may be, for example, a position of an intersection P1 between an extension line of the slewing axis AX and the ground GR, or may be a position of a portion where a relative position with respect to the slewing axis AX is identified in advance.

Hereinafter, a case where the position information detector 53 is LiDAR will be described as an example. In this case, the three-dimensional position information includes point cloud data regarding the upper slewing body 2, the boom 4, the arm 5, and the mark 60 (specific part) when the upper slewing body 2 is slewing. The LiDAR can irradiate a detection target with laser light and measure a distance to the detection target, a shape of the detection target, and the like based on information of a reflected light of the laser light.

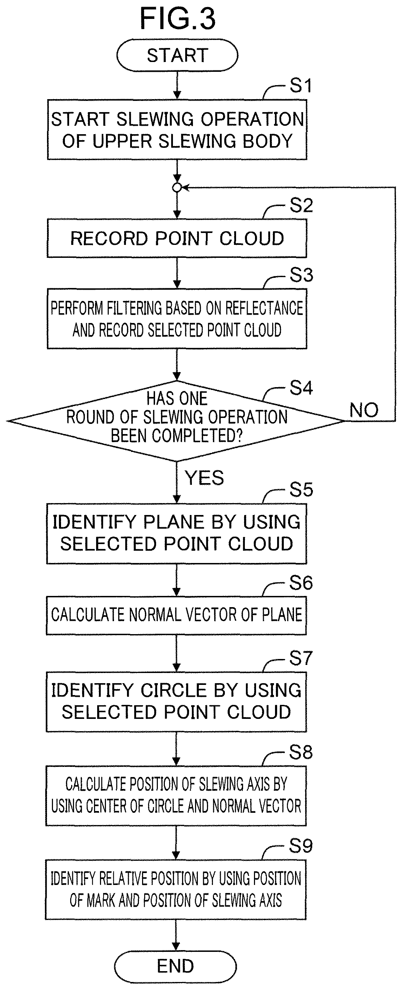

FIG. 3 is a flowchart showing an example of calculation processing performed by the controller 52 of the position identification system 50 according to the first embodiment.

As shown in FIG. 3, the controller 52 causes the upper slewing body 2 to start the slewing operation (step S1). The controller 52 may control hydraulic equipment including a hydraulic pump and a control valve such that the upper slewing body 2 performs the slewing operation in accordance with an operation applied to an operation lever by the operator. The controller 52 may control the hydraulic equipment so that the upper slewing body 2 performs the slewing operation even when an operation is not applied to the operation lever by the operator.

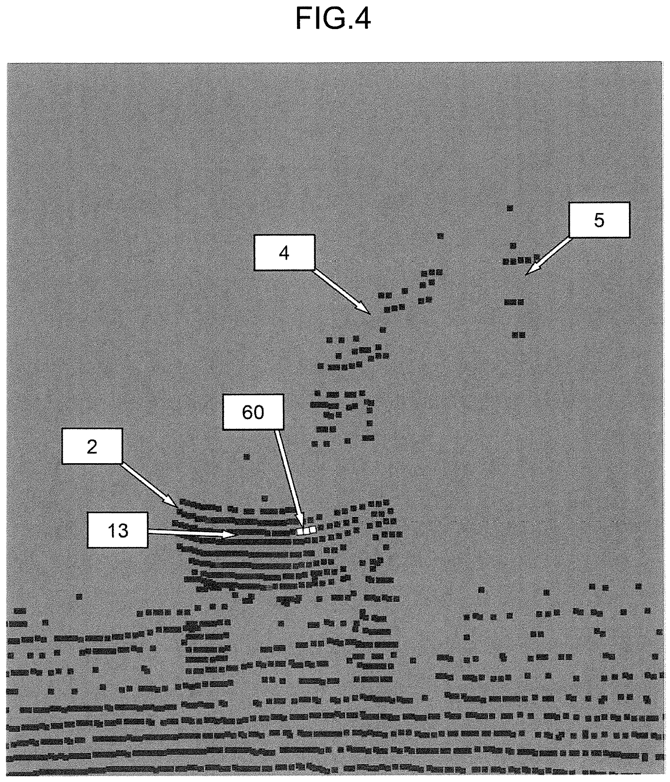

The position information detector 53 acquires point cloud data that is three-dimensional position information of the detection target when the upper slewing body 2 is slewing, and the controller 52 records the point cloud data input from the position information detector 53 (step S2). FIG. 4 is a schematic diagram showing an example of the three-dimensional position information (point cloud data) acquired by the position information detector 53. The point cloud data shown in FIG. 4 is the point cloud data of the detection target at a certain time point when the upper slewing body 2 is slewing. As shown in FIG. 4, a difference between the reflected light from the mark 60 (specific part) including the reflector and the reflected light from the outer surface 13 of the upper slewing body 2, the boom 4, and the arm 5 (a portion different from the mark 60) clearly appears in the point cloud data shown in FIG. 4.

The controller 52 selects the point cloud data of the mark 60 (specific part) from all the point cloud data by performing filtering based on a reflectance (step S3). Since the mark 60 includes the reflector, a difference between the specific part position information (point cloud data of the mark 60) and information other than the specific part position information (point cloud data of a portion different from the mark 60, such as the outer surface 13 of the upper slewing body 2, the boom 4, and the arm 5) becomes clear in the slewing information acquired by the position information detector 53. Since the reflectance of the mark 60 is higher than a reflectance of a portion different from the mark 60, the controller 52 can easily select the specific part position information from the slewing information (the three-dimensional position information).

A threshold value of filtering based on the reflectance may be a value set in advance in the controller 52, or may be manually identified by the operator, for example, while the operator confirms the point cloud data displayed on the display device 54.

The controller 52 may perform filtering as follows, for example. The controller 52 may divide three-dimensional coordinates into a grid shape such that the three-dimensional coordinates are partitioned by a predetermined size, and calculate an average reflectance of the point cloud included in each grid. In this case, the controller 52 may compare the average reflectance of each grid with a predetermined threshold value, extract grids having an average reflectance exceeding the predetermined threshold value from among a large number of grids, and identify a plurality of extracted grids as data of the mark 60. The predetermined threshold value may be, for example, a value obtained by adding a predetermined value to an average value of the reflectances of all the point cloud data. The predetermined value may be, for example, a value obtained by doubling a standard deviation calculated by using the reflectances of all the point cloud data.

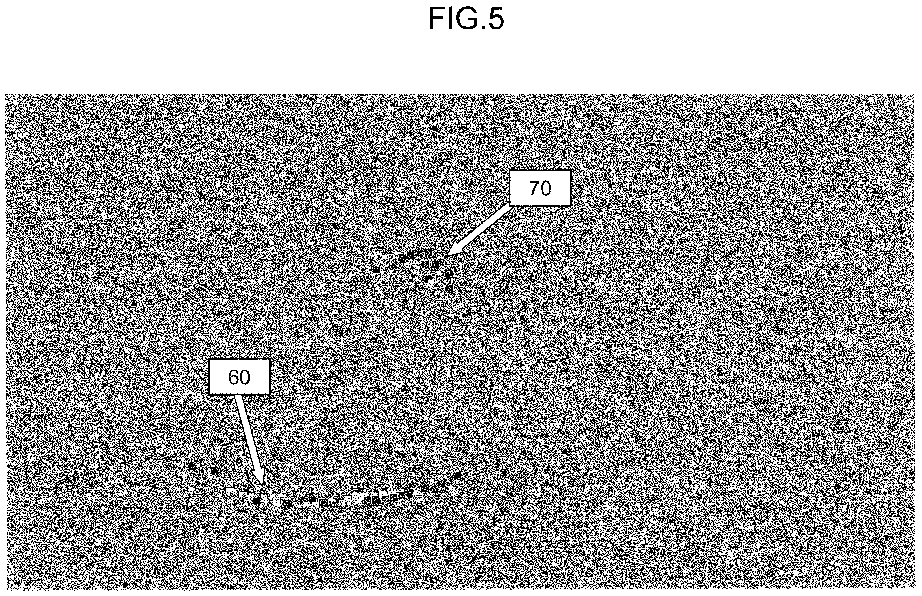

FIG. 5 is a schematic diagram showing an example of the specific part position information selected from the three-dimensional position information. As shown in FIG. 5, the specific part position information acquired and selected when the upper slewing body 2 is slewing, that is, the point cloud data of the mark 60 includes information regarding the track of the mark 60 that moves about the slewing axis AX when the upper slewing body 2 is slewing. The track of the mark 60 has a circular shape or an arc shape about the slewing axis AX in three-dimensional coordinates. Although the selected point cloud data shown in FIG. 5 includes not only the point cloud data of the mark 60 but also the point cloud data of another part 70, since the track of the mark 60 has a circular shape or an arc shape in three-dimensional coordinates, the controller 52 can distinguish the point cloud data of the mark 60 from the point cloud data of the another part 70.

The controller 52 determines whether one round of the slewing operation by the upper slewing body 2 has been completed, that is, whether the upper slewing body 2 has rotated 360° (step S4). In a case where one round of the slewing operation has not been completed (NO in step S4), the controller 52 continues the recording of the point cloud data (step S2) and the filtering (step S3). In a case where one round of the slewing operation has been completed (YES in step S4), the controller 52 performs the processing of step S5.

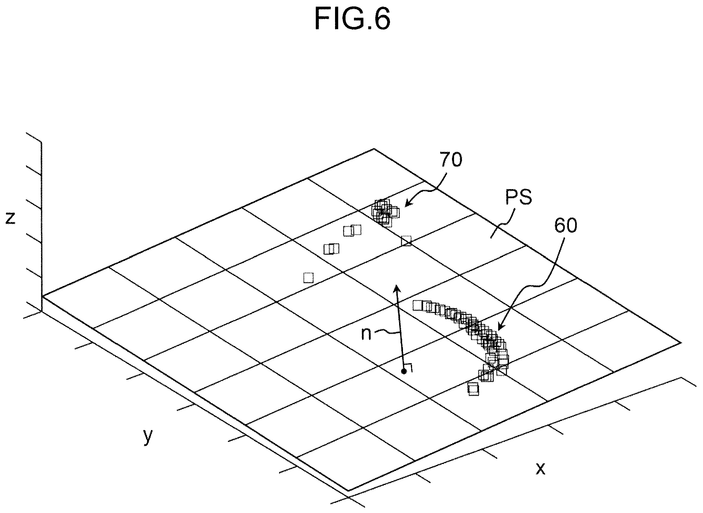

The controller 52 identifies a plane corresponding to the track of the mark 60 by using the selected specific part position information, that is, the selected point cloud data of the mark 60 (step S5). FIG. 6 is a diagram showing a plane PS identified by using the specific part position information. As shown in FIG. 6, the point cloud data of the mark 60 includes a large number of pieces of coordinate data of the mark 60 arranged in an arc shape in three-dimensional coordinates represented by an x-axis, a y-axis, and a z-axis orthogonal to each other. The x-axis and the y-axis may be coordinate axes orthogonal to each other on a plane parallel to the ground GR, may be coordinate axes orthogonal to each other on a horizontal plane at a predetermined height position, or may be other coordinate axes. The z-axis may be a coordinate axis orthogonal to the x-axis and the y-axis. The arc-shaped track of the mark 60 represented by the coordinate data of the mark 60 is located on or near a certain plane (for example, plane PS in FIG. 6). Therefore, the controller 52 can identify the plane PS by using the selected point cloud data of the mark 60 (a large number of pieces of coordinate data of the mark 60). The plane PS identified by the controller 52 may be represented by an equation of a plane. Specifically, for example, the plane PS may be represented by an equation of a plane in the three-dimensional coordinates.

Next, the controller 52 calculates a normal vector (n) of the identified plane PS (step S6).

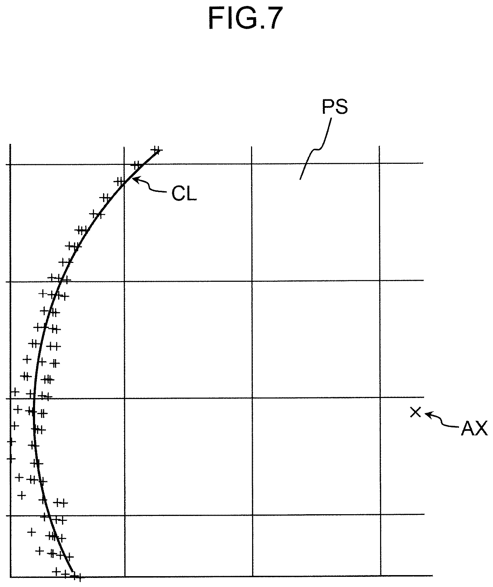

Then, the controller 52 identifies a circle corresponding to the track of the mark 60 by using the selected specific part position information, that is, the selected point cloud data of the mark 60 (step S7). FIG. 7 is a diagram showing a circle CL (a part of a circle) identified by using the specific part position information. Specifically, for example, the controller 52 may project a large number of pieces of coordinate data of the marks 60 arranged in an arc shape on the plane PS as shown in FIG. 7, and calculate a circle most suitable for the projected large number of pieces of coordinate data to identify the circle CL corresponding to the track of the mark 60.

Next, the controller 52 calculates the position of the slewing axis AX by using the normal vector (n) of the plane PS and the center of the circle CL (step S8). FIG. 7 shows the identified position of the slewing axis AX.

Next, the controller 52 identifies a relative position of the work machine 100 with respect to the ground GR on which the lower travelling body 1 of the work machine 100 is disposed based on relative position information which is information regarding the relative position of the mark 60 with respect to the upper slewing body 2 or the lower travelling body 1 and based on the position of the slewing axis AX (step S9). The relative position of the work machine 100 with respect to the ground GR may be, for example, the position of the intersection P1 between the extension line of the slewing axis AX and the ground GR as shown in FIG. 2. The relative position of the work machine 100 with respect to the ground GR may be a position of a predetermined portion on the slewing axis AX in the upper slewing body 2.

The controller 52 may store in advance information regarding the relative position of the mark 60 with respect to the upper slewing body 2 as the relative position information. In this case, the relative position information may be stored with reference to a case where a slewing angle of the upper slewing body 2 with respect to the lower travelling body 1 is zero. The controller 52 may store in advance information regarding a relative height position of the mark 60 with respect to the lower travelling body 1 as the relative position information.

### [Modification of first embodiment]

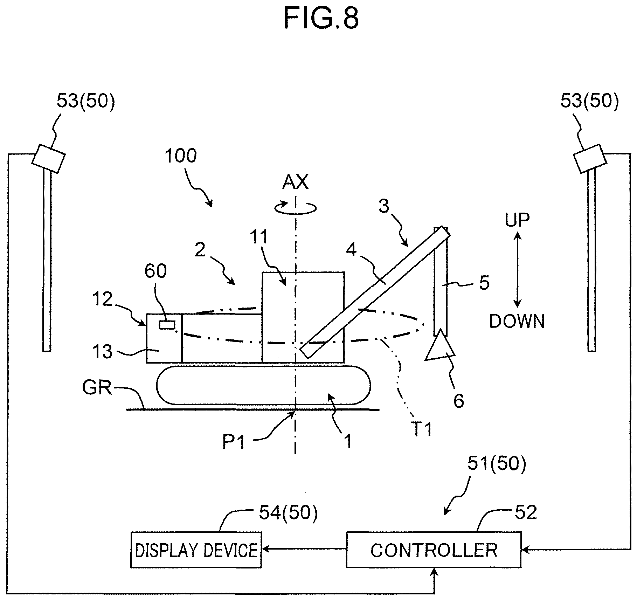

FIG. 8 is a schematic diagram showing the position identification system 50 according to a modification of the first embodiment. The position identification system 50 according to the modification shown in FIG. 8 is different from the position identification system 50 shown in FIG. 2 in including a plurality of position information detectors 53, and other configurations are similar to those of the position identification system 50 shown in FIG. 2.

In the specific example shown in FIG. 8, the plurality of position information detectors 53 includes a first position information detector 53 disposed at a position shifted in one direction with respect to the work machine 100 and a second position information detector 53 disposed at a position shifted in a direction opposite to the one direction with respect to the work machine 100. The slewing information acquired by these position information detectors 53 when the upper slewing body 2 is slewing may include information regarding a track of an arc shape with a larger central angle or a track of a complete circular shape (track of the mark 60) as compared with the slewing information acquired by only one position information detector 53 as shown in FIG. 2. Therefore, in this modification, a circle or an arc corresponding to the track of the mark 60 can be identified more accurately.

The calculation processing by the controller 52 in this modification is basically similar to the calculation processing shown in FIG. 3. In this modification, the controller 52 may perform, for example, the following calculation processing.

The controller 52 may perform the processing of steps S2 and S3 in FIG. 3 using the slewing information acquired by the first position information detector 53 and the processing of steps S2 and S3 in FIG. 3 using the slewing information acquired by the second position information detector 53 in parallel, and when one round of slewing operation is completed (YES in step S4), the controller may identify a plane by using the specific part position information selected from the slewing information acquired by the first position information detector 53 and identify a plane by using the specific part position information selected from the slewing information acquired by the second position information detector 53. Then, the controller 52 may identify one plane PS from the identified two planes (step S5 in FIG. 3). Specifically, for example, the controller 52 may identify an intermediate (average) plane between the two identified planes as the plane PS (step S5 in FIG. 3). The controller 52 may combine the specific part position information selected from the slewing information acquired by the first position information detector 53 and the specific part position information selected from the slewing information acquired by the second position information detector 53 to generate combined position information, and identify the plane PS by using the combined position information (step S5 in FIG. 3).

### [Second embodiment]

In the second embodiment shown in FIG. 9, the specific part includes the arm 5. In the second embodiment, the arm 5 is an example of a work device specific part in the present disclosure.

In the second embodiment, the controller 52 identifies a cylinder or a part of a cylinder corresponding to a track of the arm 5 when the upper slewing body 2 is slewing by using the specific part position information, and identifies the position of a center line of the identified cylinder as the position of the slewing axis AX. As shown in FIG. 9, in a case where the arm 5 (work device specific part) moves along the constant cylindrical orbit T2 about the slewing axis AX when the upper slewing body 2 is slewing, the track of the arm 5 when the upper slewing body 2 is slewing has a cylindrical shape or a shape like a part of a cylinder about the slewing axis AX, and thus the specific part position information includes information regarding the track of the arm 5 (work device specific part) having a cylindrical shape or a shape like a part of a cylinder. Therefore, the controller 52 can identify the cylinder or a part of the cylinder corresponding to a cylindrical track (cylindrical orbit T2) drawn by the arm 5 by using the specific part position information, and can identify the position of the center line of the identified cylinder as the position of the slewing axis AX.

In the second embodiment, in order to improve the accuracy of identifying the cylinder or a part of the cylinder corresponding to the cylindrical track drawn by the arm 5, the length of the arm 5 in a vertical direction (the direction of the slewing axis) is preferably larger, and the distance between the arm 5 and the upper slewing body 2 in a horizontal direction is preferably larger. The position and shape of the cylinder become clearer as the vertical length of the cylindrical orbit T2 drawn by the arm 5 when the upper slewing body 2 is slewing is larger. As the distance between the arm 5 and the upper slewing body 2 in the horizontal direction increases, it is easier to distinguish between the information regarding the track of the arm 5 (cylindrical track) and the information regarding the track of the upper slewing body 2 included in the three-dimensional position information.

In the position identification system 50 according to the second embodiment, the specific part (the work device specific part) includes the arm 5 of the work device 3. When the slewing information is acquired by the position information detector 53, the arm 5 is disposed in such a posture as to extend along the slewing axis AX, that is, in such a posture as to extend vertically as shown in FIG. 9. Therefore, the specific part position information includes arm track information that is information regarding the track (cylindrical track) of the arm 5 when the arm 5 rotates about the slewing axis AX in such a posture that the arm 5 extends along the slewing axis AX. The arm 5 can be disposed in such a posture as to extend vertically, and the length in the vertical direction of the arm 5 disposed in this posture is much larger than, for example, the dimension in the vertical direction of the bucket 6. Moreover, by arranging the arm 5 in a posture that the arm 5 extends vertically while reducing the angle between the boom 4 and the ground GR, it is also possible to increase the distance between the arm 5 and the upper slewing body 2 in the horizontal direction. Therefore, the position identification system 50 according to the second embodiment can improve the accuracy with which the controller 52 identifies the cylinder or a part of the cylinder.

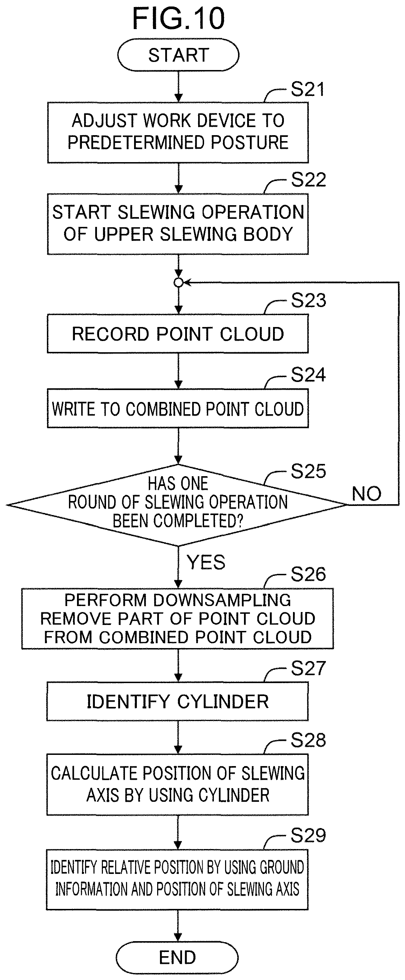

FIG. 10 is a flowchart showing an example of calculation processing performed by the controller 52 of the position identification system 50 according to the second embodiment.

As shown in FIG. 10, the controller 52 adjusts the work device 3 to a predetermined posture (step S21). Specifically, the controller 52 adjusts the posture of the work device 3 such that the arm 5 is disposed in such a posture as to extend along the slewing axis AX as shown in FIG. 9. The controller 52 may control hydraulic equipment including the hydraulic pump and the control valve such that the work device 3 is adjusted to the predetermined posture in accordance with an operation applied to the operation lever by the operator. The controller 52 may control the hydraulic equipment such that the work device 3 is adjusted to the predetermined posture even when an operation is not applied to the operation lever by the operator.

Next, the controller 52 causes the upper slewing body 2 to start the slewing operation (step S22). The controller 52 may control hydraulic equipment including the hydraulic pump and the control valve such that the upper slewing body 2 performs the slewing operation in accordance with an operation applied to the operation lever by the operator. The controller 52 may control the hydraulic equipment so that the upper slewing body 2 performs the slewing operation even when an operation is not applied to the operation lever by the operator.

The position information detector 53 acquires point cloud data that is three-dimensional position information of the detection target including the arm 5 when the upper slewing body 2 is slewing, and the controller 52 records the point cloud data input from the position information detector 53 (step S23). The controller 52 may sequentially store the point cloud data of the detection target at every predetermined timing at the time of slewing. The predetermined timing may be, for example, a predetermined time, a predetermined control cycle, or another timing. Then, the controller 52 writes the newly stored point cloud data to the point cloud data having stored so far to combine these point cloud data (step S24). That is, the controller 52 generates combined point cloud data obtained by combining the point cloud data at various slewing angles.

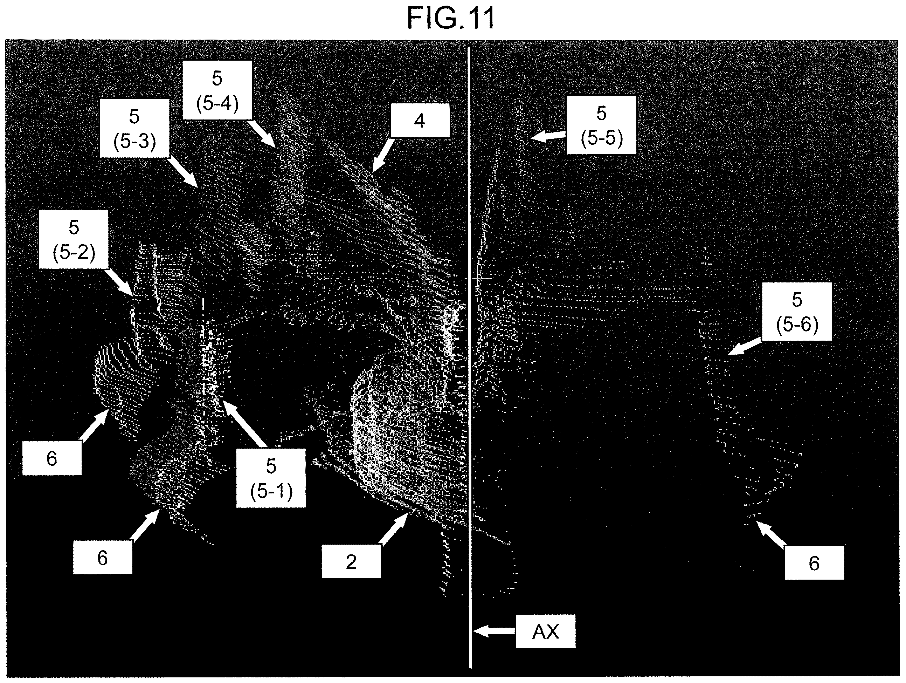

FIG. 11 is a schematic diagram showing the three-dimensional position information as the slewing information acquired by the position information detector 53 of the position identification system 50 in the second embodiment. FIG. 11 is an example of the combined point cloud data generated in step S24. The combined point cloud data shown in FIG. 11 includes, for example, the point cloud data of the arm 5 acquired at a first timing (5-1), the point cloud data of the arm 5 acquired at a second timing (5-2), the point cloud data of the arm 5 acquired at a third timing (5-3), the point cloud data of the arm 5 acquired at a fourth timing (5-4), the point cloud data of the arm 5 acquired at a fifth timing (5-5), and the point cloud data of the arm 5 acquired at a sixth timing (5-6). The combined point cloud data shown in FIG. 11 also includes the point cloud data of the upper slewing body 2, the boom 4, and the bucket 6 acquired at the timings (5-1) to (5-6).

The controller 52 determines whether one round of the slewing operation by the upper slewing body 2 has been completed, that is, whether the upper slewing body 2 has rotated 360° (step S25). In a case where one round of the slewing operation has not been completed (NO in step S25), the controller 52 continues the recording of the point cloud data (step S23) and the writing to a combined point cloud (step S24). In a case where one round of the slewing operation has been completed (YES in step S25), the controller 52 performs the processing of step S26.

Next, the controller 52 performs downsampling. The controller 52 removes a part of the generated combined point cloud (step S26). The downsampling is processing for reducing a data amount of the combined point cloud within a range that does not significantly affect the accuracy of identification of the position of the slewing axis AX. Performing this downsampling can reduce a load of the calculation processing performed by the controller 52. Specifically, for example, the controller 52 may perform downsampling by dividing three-dimensional coordinates into a grid shape such that the three-dimensional coordinates are partitioned by a predetermined size, setting some of a plurality of points (for example, one of the plurality of points) included in each grid as a representative point in the grid, and deleting the other points in the grid. The removal of a part of the point cloud from the combined point cloud is processing performed to improve the accuracy of identification of the cylinder. This processing is processing of deleting some or all of background points (hidden points) at the back of a foreground from the combined point cloud. The controller 52 may perform the processing by using a known algorithm for deleting a hidden point. The processing in step S26, that is, the processing related to downsampling and the processing related to removal of a part of the point cloud from the combined point cloud are not essential processing, and one or both of these processes can be omitted.

Next, the controller 52 identifies a cylinder corresponding to the track of the arm 5 at the time of slewing by using the combined point cloud or the downsampled combined point cloud (step S27). As described above, when the upper slewing body 2 is slewing, the arm 5 draws a track along the cylindrical orbit T2 (track along a cylindrical surface) as shown in FIGS. 9 and 11. Accordingly, the controller 52 may identify the cylinder by using the combined point cloud or the downsampled combined point cloud in the three-dimensional coordinates represented by the x-axis, the y-axis, and the z-axis orthogonal to each another. The cylinder identified by the controller 52 may be represented by an equation of a cylindrical surface. Specifically, for example, the identified cylinder may be represented by an equation of a cylindrical surface in the three-dimensional coordinates.

In step S27, the controller 52 may identify a cylinder from the combined point cloud by using, for example, a method such as shape fitting. Specifically, in step S27, the controller 52 may identify a cylinder from the combined point cloud by using an algorithm for shape fitting such as RANSAC (random sample consensus) or MSAC (M-estimator sample consensus).

Next, the controller 52 calculates the position of the slewing axis AX by using the identified cylinder (cylindrical surface) (step S28). FIG. 11 shows the identified position of the slewing axis AX.

Next, the controller 52 identifies the relative position of the work machine 100 with respect to the ground GR on which the lower travelling body 1 is disposed based on ground information that is information regarding the ground GR and based on the position of the slewing axis AX (step S29). The relative position of the work machine 100 may be, for example, the position of the intersection P1 (see FIG. 9) between the extension line of the slewing axis AX and the ground GR, or may be a position of a portion where a relative position with respect to the slewing axis AX is identified in advance. The ground information may be information capable of identifying the position of the ground GR, such as coordinates of the ground GR, for example. The controller 52 may store the ground information in advance, or an operator may input the ground information to the controller 52. The controller 52 may extract the position of the ground GR by using a method such as plane fitting, for example. In a case where the work machine 100 includes an inclination sensor capable of detecting the posture (for example, the posture of the lower travelling body 1 or the posture of the upper slewing body 2) of the work machine 100, such as an IMU sensor, the controller 52 may calculate the position of the ground GR based on a detection result of the inclination sensor.

### [First modification of second embodiment]

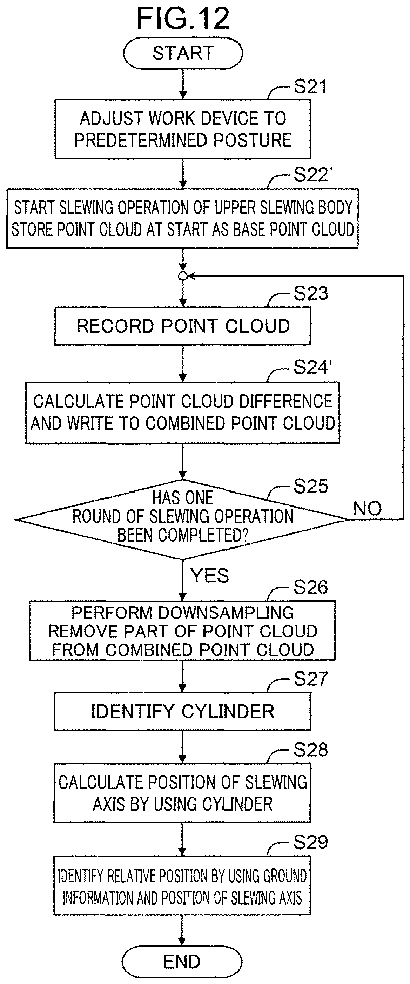

In the position identification system 50 according to a first modification of the second embodiment, the controller 52 may perform the following calculation processing shown in FIG. 12. In step S22', the controller 52 stores the point cloud data of the detection target at the start of the slewing operation of the upper slewing body 2 as base point cloud data.

Then, the controller 52 calculates a point cloud difference that is a difference between the subsequently acquired point cloud data and the base point cloud data, and writes the point cloud difference to the previously acquired point cloud data to generate a combined point cloud (step S24'). The point cloud difference mainly has a high ratio of the point cloud data corresponding to the work device 3 including the arm 5. The reason is that, as shown in FIG. 11, the point cloud data corresponding to the upper slewing body 2 does not change much near the slewing axis AX, whereas the point cloud data corresponding to the work device 3 including the arm 5 changes relatively greatly in response to a change in the timing at which the point cloud data is acquired as indicated by the point cloud data at the first to sixth timings (5-1) to (5-6).

The position identification system 50 according to the first modification of the second embodiment can extract the point cloud data corresponding to the work device 3 including the arm 5 from all the point cloud data by calculating the point cloud difference. Therefore, the first modification can further improve the accuracy with which the controller 52 identifies the cylinder or a part of the cylinder. Note that steps S21, S23, and S25 to S29 shown in FIG. 12 are similar to steps S21, S23, and S25 to S29 shown in FIG. 10.

### [Second modification of second embodiment]

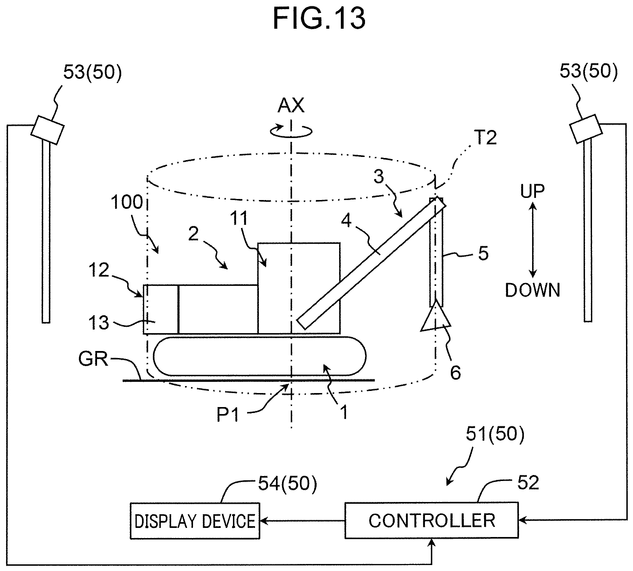

FIG. 13 is a schematic diagram showing the position identification system 50 according to a second modification of the second embodiment. The position identification system 50 according to the second modification shown in FIG. 13 is different from the position identification system 50 according to the second embodiment shown in FIG. 9 in including a plurality of position information detectors 53, and other configurations are similar to those of the position identification system 50 shown in FIG. 9.

In the specific example shown in FIG. 13, the plurality of position information detectors 53 includes a first position information detector 53 disposed at a position shifted in one direction with respect to the work machine 100 and a second position information detector 53 disposed at a position shifted in a direction opposite to the one direction with respect to the work machine 100. The slewing information acquired by these position information detectors 53 when the upper slewing body 2 is slewing can include information regarding a substantially complete cylindrical track (track of the arm 5) as compared with the slewing information acquired by only one position information detector 53 as shown in FIG. 9. Therefore, in the second modification, a cylinder or a part of the cylinder corresponding to the track of the arm 5 can be identified more accurately.

The calculation processing by the controller 52 in the second modification is basically similar to the calculation processing shown in FIG. 10 (or FIG. 12). In this modification, the controller 52 may perform, for example, the following calculation processing.

The controller 52 may perform the processing of steps S23 and S24 in FIG. 10 using the slewing information acquired by the first position information detector 53 and the processing of steps S23 and S24 in FIG. 10 using the slewing information acquired by the second position information detector 53 in parallel, and when one round of slewing operation is completed (YES in step S25), the controller may identify a cylinder by using the specific part position information selected from the slewing information acquired by the first position information detector 53 and identify a cylinder by using the specific part position information selected from the slewing information acquired by the second position information detector 53. Then, the controller 52 may identify one cylinder from the identified two cylinders (step S27 in FIG. 10). Specifically, for example, the controller 52 may identify an intermediate (average) cylinder between the two identified cylinders as the cylinder corresponding to the track of the arm 5 (step S27 in FIG. 10). The controller 52 may combine the specific part position information selected from the slewing information acquired by the first position information detector 53 and the specific part position information selected from the slewing information acquired by the second position information detector 53 to generate combined position information, and identify the cylinder by using the combined position information (step S27 in FIG. 10).

### [Other modifications]

The embodiments of the present disclosure and some modifications have been described above, but the present disclosure is not limited to the above contents, and further includes modifications below, for example.

### (A) Position identification device

The position identification device 51 including the controller 52 may be mounted on the work machine 100, but may be configured to be disposed at a place different from the work machine 100 instead of being mounted on the work machine 100. In this case, the position identification device 51 may be included in an information terminal. The information terminal may be, for example, a mobile information terminal such as a laptop computer, a smartphone, or a tablet terminal, a stationary information terminal such as a desktop personal computer, or a management device such as a server.

### (B) Work machine

The work machine in the present disclosure may be configured to be operated by the operator in a cab of the upper slewing body 2, or may be configured to be operated by the operator using a remote operation device disposed at a remote location. In this case, the position identification device 51 may be disposed at a remote place.

### (C) Specific part

In the first embodiment, the mark 60 is attached to the back surface of the upper slewing body 2 in the outer surface 13, but the portion to which the mark 60 is attached is not limited to the outer surface 13 of the upper slewing body 2. The mark 60 may be attached to another portion (for example, a surface of the work device 3) that rotates about the slewing axis AX along with the slewing of the upper slewing body 2. The mark 60 may be a part of the work machine 100 instead of a member attached to the upper slewing body 2 or the work device 3. The part of the work machine 100 may be, for example, a part of the upper slewing body 2 or a part of the work device 3.

In a case where the mark 60 has a shape elongated in the vertical direction, in the first embodiment, the controller 52 may identify a cylinder corresponding to the track of the mark 60 instead of identifying a circle corresponding to the track of the mark 60, and may identify the position of the slewing axis by using the center line of the cylinder.

In the second embodiment, a case has been exemplified in which the specific part (work device specific part) is the arm 5, but the work device specific part is not limited to the arm 5. The work device specific part may be at least a part of the work device, and may be, for example, a bucket of the work device or a part of the bucket, or may be a boom of the work device or a part of the boom.

As described above, the present disclosure provides a position identification system, a position identification device, and a position identification method capable of identifying a position of a work machine and having excellent versatility.

A position identification system according to a first aspect includes a position information detector, and a controller that identifies the position of a slewing axis of an upper slewing body of a work machine by using slewing information that is information acquired by the position information detector when the upper slewing body is slewing. The slewing information includes specific part position information that is information regarding a position of a specific part of the work machine, the specific part rotating about the slewing axis along with the slewing of the upper slewing body.

The work machine including the upper slewing body, that is, a slewing-type work machine always has a slewing axis, and the slewing axis is located at a certain central position in the work machine. Therefore, the slewing axis can be a representative part in indicating the position of the work machine. In the first aspect, the controller can identify the position of the slewing axis as described above by using the slewing information acquired by the position information detector when the upper slewing body is slewing. Specifically, the specific part of the work machine is a part that rotates, along with the slewing of the upper slewing body, about the slewing axis common to the upper slewing body, and moves along a certain circular orbit or cylindrical orbit about the slewing axis at the time of slewing. Therefore, the specific part position information included in the slewing information acquired by the position information detector when the upper slewing body is slewing includes information regarding the position of the specific part rotating about the slewing axis as the upper slewing body slews, that is, information regarding a circular orbit or cylindrical orbit drawn by the specific part when the upper slewing body is slewing, and the slewing axis is located at the center of the circular orbit or cylindrical orbit. Thus, the controller can identify the position of the slewing axis by using the slewing information including the specific part position information. In the first aspect, the position information detector is not required to be a large-scale position measurement system such as a GNSS and a total station, and may be, for example, a simple detector (for example, LiDAR) capable of detecting position information of a detection target including the specific part at the work site at which the work machine is disposed. From the above, the position identification system according to the first aspect can identify the position of the work machine without using the GNSS and the total station, and is excellent in versatility.

The second aspect may further include the following characteristics in the position identification system according to the first aspect. In the position identification system according to the second aspect, the slewing information may include three-dimensional position information of a detection target including the specific part, three-dimensional position information being acquired by the position information detector, and the controller may select the specific part position information from the three-dimensional position information, and identify the position of the slewing axis by using the selected specific part position information. In the second aspect, even in a case where the three-dimensional position information detected by the position information detector includes not only the specific part position information that is information regarding the position of the specific part included in the detection target but also information other than the specific part position information, that is, information regarding a position of another part included in the detection target, the controller can select the specific part position information from the three-dimensional position information and identify the position of the slewing axis by using the selected specific part position information. In the second aspect, the position information detector may include a three-dimensional position information detector capable of acquiring three-dimensional position information of the detection target including the specific part.

A third aspect may further include the following characteristics in the position identification system according to the second aspect. In the position identification system according to the third aspect, the specific part may include a mark on the upper slewing body or a mark on a work device supported by the upper slewing body, and the controller may identify a circle or a part of the circle corresponding to a track of the mark when the upper slewing body is slewing by using the specific part position information, and identify a position of a center of the circle as the position of the slewing axis. In a case where the mark moves along the certain circular orbit about the slewing axis when the upper slewing body is slewing, the track of the mark when the upper slewing body is slewing has a circular shape or an arc shape about the slewing axis. Therefore, the specific part position information includes information regarding the track of the mark having a circular shape or an arc shape. Therefore, the controller can identify a circle or a part (arc) of the circle corresponding to the track of the mark by using the specific part position information, and can identify the position of the center of the identified circle as the position of the slewing axis. In the third aspect, the mark may be a part of the upper slewing body, a member attached to the upper slewing body, a part of the work device, or a member attached to the work device.

A fourth aspect may further include the following characteristics in the position identification system according to the second aspect. In the position identification system according to the fourth aspect, the specific part may include a mark on the upper slewing body or a mark on a work device supported by the upper slewing body, and the controller may identify a cylinder or a part of the cylinder corresponding to a track of the mark when the upper slewing body is slewing by using the specific part position information, and identify a position of a center line of the cylinder as a position of the slewing axis. In a case where the mark moves along the certain cylindrical orbit about the slewing axis when the upper slewing body is slewing, the track of the mark when the upper slewing body is slewing has a cylindrical shape or a shape like a part of a cylinder about the slewing axis. Therefore, the specific part position information includes information regarding the track of the mark having a cylindrical shape or a shape like a part of a cylinder. Therefore, the controller can identify a cylinder or a part of the cylinder corresponding to the track of the mark by using the specific part position information, and can identify the position of the center line of the identified cylinder as the position of the slewing axis. In the fourth aspect, the mark may be a part of the upper slewing body, a member attached to the upper slewing body, a part of the work device, or a member attached to the work device.

A fifth aspect may further include the following characteristics in the position identification system according to the third or fourth aspect. In the position identification system according to the fifth aspect, the controller may identify a relative position of the work machine with respect to a ground on which the lower travelling body of the work machine is disposed based on relative position information that is information regarding a relative position of the mark with respect to the upper slewing body or the lower travelling body and based on the position of the slewing axis. The relative position of the work machine may be, for example, a position of an intersection between an extension line of the slewing axis and the ground, or may be a position of a portion where a relative position with respect to the slewing axis is identified in advance.

A sixth aspect may further include the following characteristics in the position identification system according to any one of the third to fifth aspects. In the position identification system according to the sixth aspect, the three-dimensional position information may include point cloud data regarding the upper slewing body and the mark when the upper slewing body is slewing, and the controller may select the specific part position information from the point cloud data.

A seventh aspect may further include the following characteristics in the position identification system according to the second aspect. In the position identification system according to the seventh aspect, the specific part may include a work device specific part that is at least a part of the work device supported by the upper slewing body, and the controller may identify a cylinder or a part of the cylinder corresponding to a track of the work device specific part when the upper slewing body is slewing by using the specific part position information, and may identify a position of a center line of the cylinder as the position of the slewing axis. In a case where the work device specific part moves along the certain cylindrical orbit about the slewing axis when the upper slewing body is slewing, the track of the work device specific part when the upper slewing body is slewing has a cylindrical shape or a shape like a part of a cylinder about the slewing axis. Therefore, the specific part position information includes information regarding the track of the work device specific part having a cylindrical shape or a shape like a part of a cylinder. Therefore, the controller can identify a cylinder or a part of the cylinder corresponding to the track of the work device specific part by using the specific part position information, and can identify the position of the center line of the identified cylinder as the position of the slewing axis.

The work device specific part may be at least a part of the work device, and may be, for example, a bucket of the work device or a part of the bucket, or may be a boom of the work device or a part of the boom. In the position identification system according to the seventh aspect, in order to improve the accuracy of identifying the cylinder or a part of the cylinder, the length of the work device specific part in a vertical direction (the direction of the slewing axis) is preferably larger, and the distance between the work device specific part and the upper slewing body in a horizontal direction is preferably larger. This is because the position and the shape of the cylinder become clearer as the vertical length of the cylindrical orbit drawn by the work device specific part at the time of the slewing is larger, and the information regarding the track of the work device specific part included in the three-dimensional position information and the information regarding the track of the upper slewing body become easier to distinguish as the distance between the work device specific part and the upper slewing body in the horizontal direction is larger.

An eighth aspect preferably further includes the following characteristics in the position identification system according to the seventh aspect. In the position identification system according to the eighth aspect, the work device specific part preferably includes an arm of the work device, and the specific part position information preferably includes arm track information that is information regarding a track of the arm when the arm rotates about the slewing axis in such a posture that the arm extends along the slewing axis. The arm of the work device can be disposed in such a posture as to extend vertically, that is such a posture as to extend along the slewing axis, and the length in the vertical direction of the arm disposed in this posture is much larger than, for example, the dimension of the bucket. Moreover, by arranging the arm in a posture that the arm extends vertically while reducing the angle between the boom and the ground, it is also possible to increase the distance between the arm and the upper slewing body in the horizontal direction. Therefore, the position identification system according to the eighth aspect can improve the accuracy with which the controller identifies the cylinder or a part of the cylinder.

A ninth aspect may further include the following characteristics in the position identification system according to the seventh or eighth aspect. In the position identification system according to the ninth aspect, the controller may identify a relative position of the work machine with respect to a ground on which the lower travelling body of the work machine is disposed based on ground information that is information regarding the ground and based on the position of the slewing axis. The relative position of the work machine may be, for example, a position of an intersection between an extension line of the slewing axis and the ground, or may be a position of a portion where a relative position with respect to the slewing axis is identified in advance.

A tenth aspect may further include the following characteristics in the position identification system according to any one of the seventh to ninth aspects. In the position identification system according to the tenth aspect, the three-dimensional position information may include point cloud data regarding the upper slewing body and the work device when the upper slewing body is slewing, and the controller may select the specific part position information from the point cloud data.

An eleventh aspect may further include the following characteristics in the position identification system according to the tenth aspect. In the position identification system according to the eleventh aspect, the controller may select the specific part position information by using a point cloud difference calculated by using the point cloud data.

A twelfth aspect may further include the following characteristics in the position identification system according to the first aspect. In the position identification system according to the twelfth aspect, the specific part may include a mark on the upper slewing body or a mark on the work device supported by the upper slewing body. When the upper slewing body is slewing, the mark moves along a constant circular orbit or cylindrical orbit about the slewing axis. In a case where the mark moves along the circular orbit when the upper slewing body is slewing, a track of the mark when the upper slewing body is slewing has a circular shape or an arc shape. In a case where the mark moves along the cylindrical orbit when the upper slewing body is slewing, a track of the mark when the upper slewing body is slewing has a cylindrical shape or a shape like a part of a cylinder. Therefore, in the position identification system according to the twelfth aspect, the track of the mark facilitates specification of the position of the slewing axis. In the twelfth aspect, the mark may be a part of the upper slewing body, a member attached to the upper slewing body, a part of the work device, or a member attached to the work device.

A thirteenth aspect preferably further includes the following characteristics in the position identification system according to the third, fourth, or twelfth aspect. That is, in the position identification system according to the thirteenth aspect, the mark preferably includes a reflector. Since the mark includes the reflector, a difference between the specific part position information and information other than the specific part position information becomes clearer in the slewing information acquired by the position information detector, and thus, the controller can easily select the specific part position information from the slewing information.

A fourteenth aspect may further include the following characteristics in the position identification system according to the first aspect. That is, in the position identification system according to the fourteenth aspect, the specific part may include a work device specific part that is at least a part of the work device supported by the upper slewing body. When the upper slewing body is slewing, the work device specific part moves along a constant circular orbit or cylindrical orbit about the slewing axis. In a case where the work device specific part moves along the circular orbit when the upper slewing body is slewing, a track of the work device specific part when the upper slewing body is slewing has a circular shape or an arc shape. In a case where the work device specific part moves along the cylindrical orbit when the upper slewing body is slewing, a track of the work device specific part when the upper slewing body is slewing has a cylindrical shape or a shape like a part of a cylinder. Therefore, in the position identification system according to the fourteenth aspect, the track of the work device specific part facilitates specification of the position of the slewing axis.

A position identification device according to a fifteenth aspect includes a controller that identifies a position of a slewing axis of an upper slewing body of a work machine by using slewing information that is information acquired by a position information detector when the upper slewing body is slewing, in which the slewing information includes specific part position information that is information regarding a position of a specific part of the work machine, the specific part rotating about the slewing axis along with slewing of the upper slewing body. In the fifteenth aspect, the controller can identify the position of the slewing axis as described above by using the slewing information acquired by the position information detector when the upper slewing body is slewing. Specifically, the specific part of the work machine is a part that rotates, along with the slewing of the upper slewing body, about the slewing axis common to the upper slewing body, and moves along a certain circular orbit or cylindrical orbit about the slewing axis at the time of slewing. Therefore, the specific part position information included in the slewing information acquired by the position information detector when the upper slewing body is slewing includes information regarding the position of the specific part rotating about the slewing axis as the upper slewing body slews, that is, information regarding a circular orbit or cylindrical orbit drawn by the specific part when the upper slewing body is slewing, and the slewing axis is located at the center of the circular orbit or cylindrical orbit. Thus, the controller can identify the position of the slewing axis by using the slewing information including the specific part position information. The position identification device according to the fifteenth aspect may further include the characteristics according to at least one of the second to fourteenth aspects.

A position identification method according to a sixteenth aspect includes acquiring slewing information when an upper slewing body of a work machine is slewing, and identifying a position of a slewing axis of the upper slewing body by a controller using the slewing information, in which the slewing information includes specific part position information that is information regarding a position of a specific part of the work machine, the specific part rotating about the slewing axis along with slewing of the upper slewing body. In the sixteenth aspect, the controller can identify the position of the slewing axis as described above by using the slewing information acquired when the upper slewing body is slewing. Specifically, the specific part of the work machine is a part that rotates, along with the slewing of the upper slewing body, about the slewing axis common to the upper slewing body, and moves along a certain circular orbit or cylindrical orbit about the slewing axis at the time of slewing. Therefore, the specific part position information included in the slewing information acquired when the upper slewing body is slewing includes information regarding the position of the specific part rotating about the slewing axis as the upper slewing body slews, that is, information regarding a circular orbit or cylindrical orbit drawn by the specific part when the upper slewing body is slewing, and the slewing axis is located at the center of the circular orbit or cylindrical orbit. Thus, the controller can identify the position of the slewing axis by using the slewing information including the specific part position information. The position identification method according to the sixteenth aspect may further include the characteristics according to at least one of the second to fourteenth aspects.

## Claims

1. position identification system comprising:
a position information detector; and
a controller that identifies a position of a slewing axis of an upper slewing body of a work machine by using slewing information that is information acquired by the position information detector when the upper slewing body is slewing, wherein
the slewing information includes specific part position information that is information regarding a position of a specific part of the work machine, the specific part rotating about the slewing axis along with slewing of the upper slewing body.

2. The position identification system according to claim 1, wherein
the slewing information includes three-dimensional position information of a detection target including the specific part, the three-dimensional position information being acquired by the position information detector, and
the controller selects the specific part position information from the three-dimensional position information, and identifies the position of the slewing axis by using the selected specific part position information.

3. The position identification system according to claim 2, wherein
the specific part includes a mark on the upper slewing body or a mark on a work device supported by the upper slewing body, and
the controller identifies a circle or a part of the circle corresponding to a track of the mark when the upper slewing body is slewing by using the specific part position information, and identifies a position of a center of the circle as the position of the slewing axis.

4. The position identification system according to claim 2, wherein
the specific part includes a mark on the upper slewing body or a mark on a work device supported by the upper slewing body, and
the controller identifies a cylinder or a part of the cylinder corresponding to a track of the mark when the upper slewing body is slewing by using the specific part position information, and identifies a position of a center line of the cylinder as the position of the slewing axis.

5. The position identification system according to claim 3 or 4, wherein
the controller identifies a relative position of the work machine with respect to a ground on which the lower travelling body of the work machine is disposed based on relative position information that is information regarding a relative position of the mark with respect to the upper slewing body or the lower travelling body and based on the position of the slewing axis.

6. The position identification system according to claim 3 or 4, wherein
the three-dimensional position information includes point cloud data regarding the upper slewing body and the mark when the upper slewing body is slewing, and
the controller selects the specific part position information from the point cloud data.

7. The position identification system according to claim 2, wherein
the specific part includes a work device specific part that is at least a part of the work device supported by the upper slewing body, and
the controller identifies a cylinder or a part of the cylinder corresponding to a track of the work device specific part when the upper slewing body is slewing by using the specific part position information, and identifies a position of a center line of the cylinder as the position of the slewing axis.

8. The position identification system according to claim 7, wherein
the work device specific part includes an arm of the work device, and
the specific part position information includes arm track information that is information regarding a track of the arm when the arm rotates about the slewing axis in such a posture that the arm extends along the slewing axis.

9. The position identification system according to claim 7, wherein the controller identifies a relative position of the work machine with respect to a ground on which the lower travelling body of the work machine is disposed based on ground information that is information regarding the ground and based on the position of the slewing axis.

10. The position identification system according to any one of claims 7 to 9, wherein
the three-dimensional position information includes point cloud data regarding the upper slewing body and the work device when the upper slewing body is slewing, and
the controller selects the specific part position information from the point cloud data.

11. The position identification system according to claim 10, wherein the controller selects the specific part position information by using a point cloud difference calculated by using the point cloud data.

12. The position identification system according to claim 1, wherein the specific part includes a mark on the upper slewing body or a mark on the work device supported by the upper slewing body.

13. The position identification system according to claim 3, 4, or 12, wherein the mark includes a reflector.

14. The position identification system according to claim 1, wherein the specific part includes a work device specific part that is at least a part of the work device supported by the upper slewing body.

15. A position identification device comprising
a controller that identifies a position of a slewing axis of an upper slewing body of a work machine by using slewing information that is information acquired by a position information detector when the upper slewing body is slewing, wherein
the slewing information includes specific part position information that is information regarding a position of a specific part of the work machine, the specific part rotating about the slewing axis along with slewing of the upper slewing body.

16. A position identification method comprising:
acquiring slewing information when an upper slewing body of a work machine is slewing; and
identifying a position of a slewing axis of the upper slewing body by a controller using the slewing information, wherein
the slewing information includes specific part position information that is information regarding a position of a specific part of the work machine, the specific part rotating about the slewing axis along with slewing of the upper slewing body.
